# EUROPEAN PATENT APPLICATION

(11) **EP 2 535 874 A2**
(43) Date of publication of application: **19.12.2012**
(21) Application number: 12003948.2
(22) Date of filing: 21.05.2012
(51) Int. Cl.: G06T 17/05, G06T 19/00

(54) **Communications system including data server storing 3D geospatial model and mobile electronic device to display 2D images based upon the 3D geospatial model**

(30) Priority: 15.06.2011 US 201113160667
(71) Applicant: Harris Corporation, Melbourne FL 32919 (US)
(72) Inventor: Gutierrez, Guillermo E., Virginia 20169 (US); Duncan, Gilbert Christopher, New Mexico 88007 (US); Villegas, Belinda R., New Mexico 88001 (US)
(74) Representative: Schmidt, Steffen

(57) **Abstract**

A communications system includes an image data server configured to store a three dimensional (3D) geospatial model, and generate a series of two dimensional (2D) images corresponding to different vantage points for a given area of the 3D geospatial model. A mobile electronic device is configured to cooperate with the image data server and includes a display, and a processor coupled to the display. The processor is configured to present an initial image from the series of 2D images on the display corresponding to an initial vantage point, permit selection of a next vantage point, and display a next image of the series of 2D images on the display corresponding to the next vantage point.

## Description

### Field of the Invention

The present invention relates to the field of communications systems, and, more particularly, to communications systems for manipulating three dimensional geospatial models and related methods.

### Background of the Invention

Three dimensional (3D) geospatial models of geographical areas may be used for many applications. For example, 3D geospatial models may be used in flight simulators. Furthermore, topographical models of man-made structures, for example, cities, may be extremely helpful in applications, such as, cellular antenna placement, urban planning, disaster preparedness and analysis, and mapping.

One advantageous approach for generating 3D geospatial models is set forth in U.S. Pat. No. 6,654,690 to Rahmes et al., which is also assigned to the present Assignee and is hereby incorporated herein in its entirety by reference. This patent discloses an automated method for making a 3D geospatial model of an area including terrain and buildings thereon based upon randomly spaced data of elevation versus position. The method includes processing the randomly spaced data to generate gridded data of elevation versus position conforming to a predetermined position grid, processing the gridded data to distinguish building data from terrain data, and performing polygon extraction for the building data to make the 3D geospatial model of the area including terrain and buildings thereon.

Portable electronic devices, such as tablet computers and smartphones are becoming pervasive in the world today for the convenience they provide. It would therefore be desirable to construct such portable electronic devices capable of storing and manipulating 3D geospatial models.

Unfortunately, the storage and manipulation of these 3D geospatial models may use a large amount of computing resources. Since computing resources of portable electronic devices may be limited, a way to make a portable electronic device storing data based upon a 3D geospatial model is desirable. In addition, since the purchase of new software applications may be undesirable in some situations, a way to store this data based upon a 3D geospatial model in an existing format may also be desirable.

### Summary of the Invention

In view of the foregoing background, it is therefore an object of the present invention to provide a communications system including a mobile electronic device able to view at least a portion of a three dimensional geospatial model stored at a data server.

This and other objects, features, and advantages in accordance with the present invention are provided by a communications system that may include an image data server configured to store a three dimensional (3D) geospatial model, and generate a series of two dimensional (2D) images corresponding to different vantage points for a given area of the 3D geospatial model. The communications system may also include a mobile electronic device configured to cooperate with the image data server and comprising a display, and a processor coupled to the display.

The processor may be configured to present an initial image from the series of 2D images on the display corresponding to an initial vantage point. The processor may also be configured to permit selection of a next vantage point, and display a next image of the series of 2D images on the display corresponding to the next vantage point. This communications system advantageously allows the mobile electronic device to display information contained in the 3D model while not having to actually store that model. This is particularly helpful because storage and direct access of the 3D model may have consumed an undesirable amount of resources of the mobile electronic device.

In some applications, the data server may generate a sequence index for the series of 2D images, and the processor may display a next image based upon the sequence index. Indeed, the data server may generate the sequence index for the series of 2D images corresponding to different vantage points in at least one of x, y and z directions.

In some applications, the image data server may be configured to generate the series of 2D images based upon selection of the given area. The mobile electronic device may select the given area. The communications system may include a command device, and the command device may select the given area.

The image data server may be configured to store the series of 2D images in a PDF file. The image data server may be configured to store the series of 2D images in a one dimensional array. Further, the image data server may be configured to store the series of 2D images in a three dimensional array.

The mobile electronic device may further comprise a wireless transceiver coupled to the processor. The wireless transceiver may be configured to communicate with the image data server.

A method aspect is directed to a method of operating a communications system. The method may include storing a three dimensional (3D) geospatial model in an image data server, and generating a series of two dimensional (2D) images corresponding to different vantage points for a given area of the 3D geospatial model, using the image data server. The method may also include presenting an initial image from the series of 2D images corresponding to an initial vantage point, on a display of a mobile electronic device, and permitting selection of a next vantage point, using the mobile electronic device. The method may further include displaying a next image of the series of 2D images corresponding to the next vantage point, on the display of the mobile electronic device.

### Brief Description of the Drawings

FIG. 1 is a block diagram of a communications system in accordance with the present invention.

FIG. 2 is a block diagram of a more detailed embodiment of a communications system in accordance with the present invention.

FIGS. 3A and 3B are an example of an initial image and a next image of the sequential series of images being displayed on the display of a mobile electronic device, such as in FIG. 1 or FIG. 2, where the vantage point changes in the Z-direction between the initial image and the next image.

FIGS. 4A and 4B are an example of an initial image and a next image of the sequential series of images being displayed on the display of a mobile electronic device, such as in FIG. 1 or FIG. 2, where the vantage point changes in the Y-direction between the initial image and the next image.

FIGS. 5A and 5B are an example of an initial image and a next image of the sequential series of images being displayed on the display of a mobile electronic device, such as in FIG. 1 or FIG. 2, where the vantage point changes in the X-direction between the initial image and the next image.

FIGS. 6A-6F are an example of an initial image and a series of subsequent images of the sequential series of images being displayed on the display of a mobile electronic device, such as in FIG. 1 or FIG. 2, where the vantage point successively changes between each image.

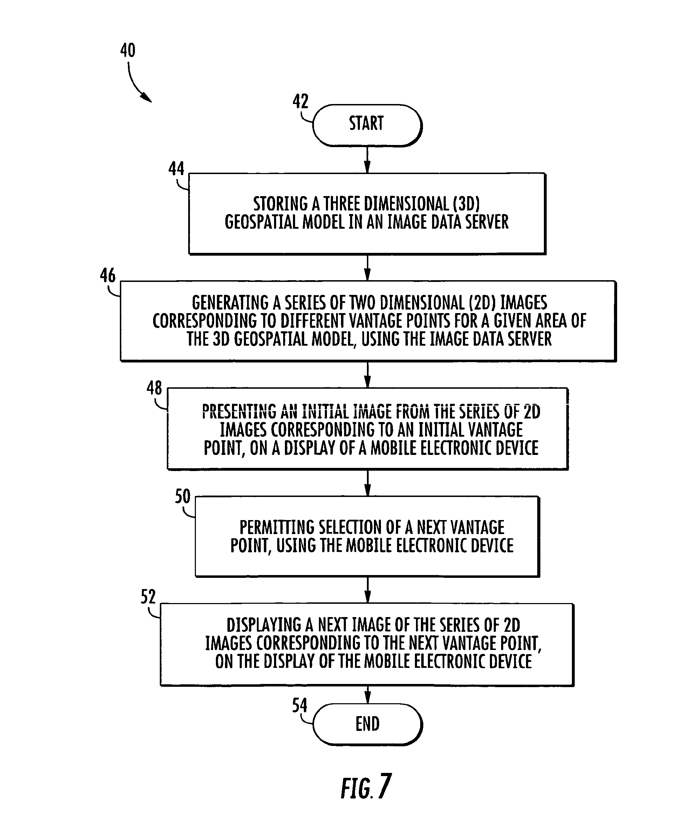

FIG. 7 is a flowchart of a method of operating a communications system in accordance with the present invention.

### Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout, and prime notation is used to indicate similar elements in alternative embodiments.

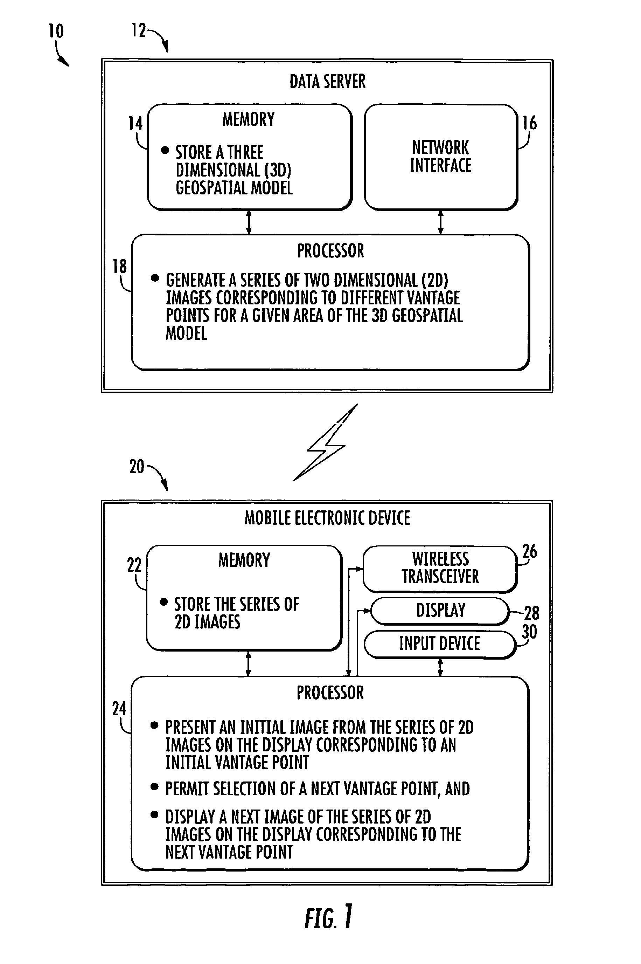

Referring initially to FIG. 1, a communications system **10** is now described. The communications system **10** includes a data server **12** and a mobile electronic device **20.** The data server **12** includes a memory **14,** and a network interface **16** coupled to the processor **18.** The memory **14** may include both volatile and non-volatile portions, and the network interface **16** may permit connectivity with a local area network (LAN), or a wide area network (WAN) such as the internet, via wired and/or wireless connections. In addition, the network interface **16** may provide connectivity via a variety of data transport protocols and ports, such as universal serial bus (USB), Firewire, and Bluetooth.

The memory **14** is configured to store a three dimensional (3D) geospatial model. By way of example, geospatial data may be captured using various techniques such as stereo optical imagery, Light Detecting and Ranging (LIDAR), Interferometric Synthetic Aperture Radar (IFSAR), etc., and is then processed to form the 3D model. Generally speaking, the data will be captured from overhead (e.g., nadir) views of the geographical area of interest by airplanes, satellites, etc., as will be appreciated by those skilled in the art. However, oblique images of a geographical area of interest may also be used in addition to (or instead of) the nadir images to add additional detail to a 3D geospatial model.

The processor **18** generates a series of two dimensional (2D) images corresponding to different vantage points for a given area of the 3D geospatial model. For example, the given area of the 3D geospatial model may be an office building, the series of 2D images may be from different vantage points along a front of the office building, or from different vantage points on different sides of the office building.

The mobile electronic device **20** may be an electronic device such as a laptop computer, a tablet computer, a smartphone, or a portable music player, for example. The mobile electronic device **20** includes a memory **22,** a wireless transceiver **26,** a display **28,** and an input device **30,** each coupled to a processor **24.** The memory **22** may include volatile and non-volatile portions, and the wireless transceiver **26** may provide both cellular and WiFi connectivity. The input device **30** may include devices such as buttons, touch sensitive pads, and trackballs, for example. In fact, in some applications, the display **28** may be a touch sensitive display, and may also serve as the input device **30.**

The memory **22** is configured to store the series of 2D images received from the data server **12.** The processor **24** is configured to present an initial image from the series of 2D images on the display **28,** the initial image corresponding to an initial vantage point. The processor **24** then permits selection of a next vantage point via the input device **30,** and displays a next image of the series of 2D images on the display **28** corresponding to the next vantage point.

This communications system **10** advantageously allows the mobile electronic device **20** to display information contained in the 3D model while not having to actually store that model. This is particularly helpful because storage and direct access of the 3D model may have consumed an undesirable amount of resources of the mobile electronic device **20.**

In addition, by displaying a series of 2D images, viewing of the information contained in the 3D model can be performed similar to reading a book, a familiar paradigm, making the system intuitive and easy to use. For example, upon viewing an initial image from an initial vantage point, the next vantage point (and thus the next image) can be selected by manipulating the input device **30** as one would manipulate a book. For example, the input device **30** may include a plurality of buttons, each button representing an arrow in a given direction (e.g., left or right), and the "pages" (the series of images) may be "flipped" (vantage point and image may be changed) by selecting a button. By hitting the left or right button, the vantage point may be changed in the X-direction, for example. This similarity to turning the pages in a book enables a new user to quickly and easily sort through and use the displayed images, decreasing or eliminating the learning curve associated with using the communications system **10.**

Some mobile electronic devices **20** may include input devices **30** with more direction buttons (e.g., left, right, up, down, forward, back, as well as diagonals), and/or the display **28** may be a touch sensitive display and response to gestures (e.g., left/right swipe, up/down swipe, pinch/unpinch, diagonal sweeps, etc). In this case, the processor **24** may scale the level of functionality of the communications system **10** based upon the functionality of the mobile electronic device **30.** In a case where the mobile electronic device **24** has a more advanced input device **30** as discussed above, the direction buttons can be used to extend the book paradigm more easily into three dimensions. For example, as described above, by hitting the left or right button, or by performing a left or right swipe, the vantage point may be changed in the X-direction. However, by hitting the up or down button, or performing an upward or downward swipe, the vantage point may be changed in the Z-direction. By hitting the forward or back button, or by performing a pinch/unpinch, the vantage point may be changed in the Y-direction. By hitting a diagonal button, or by performing a diagonal swipe, the vantage point may be rotated about the given area. Alternatively or additionally, by hitting a diagonal button or by performing a diagonal swipe, the viewing angle from the vantage point may be changed.

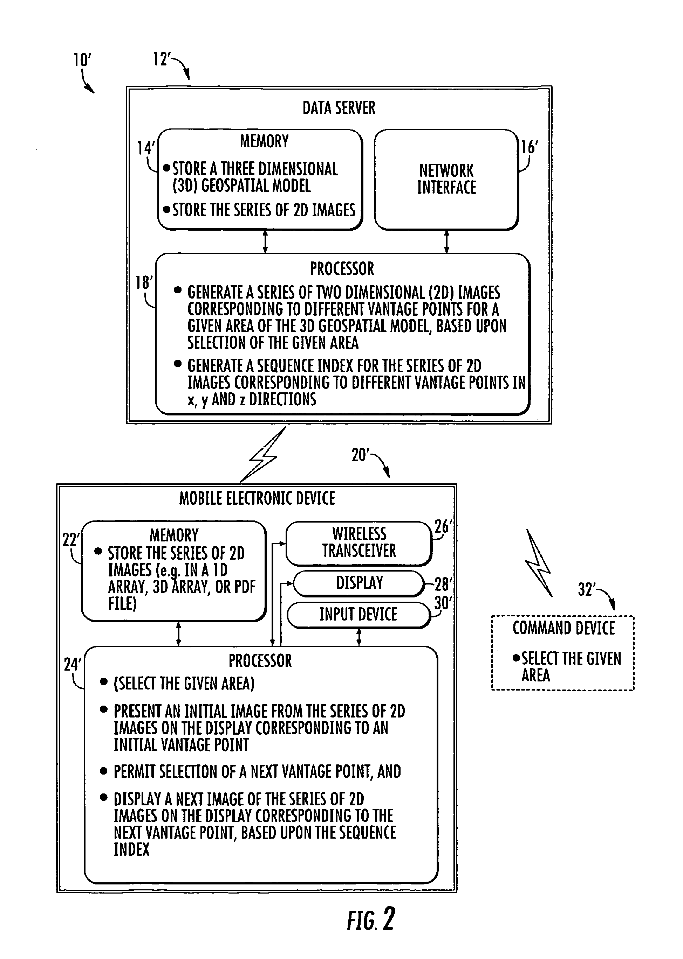

A more detailed embodiment is now discussed with reference to FIG. 2. Here, the memory **14'** of the data server **12'** stores the series of 2D images, after generation. The series of 2D images may be stored in a variety of formats, such as a one dimensional array of 2D images, a three dimensional array of 3D images, or a standard file format, such as a portable document format (PDF) file, GeoPDF, eBook file, Adobe Flash data file, or any other file format.

In addition, in this embodiment, the processor **18'** generates the series of 2D images based upon selection of the given area. Selection of the given area may be performed in a variety of ways, such as via an input device (not shown) coupled to the data server **12',** via the input device **30'** of the mobile electronic device **20',** or even by a command device **32'** (e.g., an electronic device coupled to the data server via a network).

Also in this embodiment, the processor **18'** generates a sequence index for the series of 2D images corresponding to different vantage points in the X, Y, and Z directions. The sequence index is used by the processor **24'** of the mobile electronic device **20'** in displaying the next image in the series of 2D images. That is, the processor **24'** may display the next image based upon the sequence index.

The sequence index is of particular use in embodiments where the series of 2D images is stored by the memory **22'** of the mobile electronic device **20'** in a PDF file or 1D array, for example, since a PDF file and a 1D array allow movement in one direction and not multiple directions. If the series of 2D images is stored in a PDF file, the mobile electronic device **20'** can use existing PDF viewing applications to present the initial image and the next images. As will be appreciated by those of skill in the art, a PDF file contains a plurality of "pages," and the page number being viewed by a PDF viewer can be incremented or decremented. The sequence index advantageously allows different 2D images of the sequence to be grouped together according to a direction of change of the vantage point thereof.

Typical PDF viewers allow the grouping of pages by chapter in a sequence index of a PDF file, and the increment or decrement of pages by chapter rather than page number. Therefore, the sequence of 2D images can be grouped into chapters, with each chapter representing movement of the vantage point along a different direction. This advantageously allows quick viewing of a 2D image from a desired vantage point, and quick viewing of subsequent 2D images with different vantage points along a given direction.

The sequence index may be displayed on the display **28'** of the mobile electronic device **20'** so that a user may select a given chapter. The chapters may be listed as text, such as "Interior, Exterior Front View, Exterior Top View," or may be displayed graphically. In some applications, the chapters may be displayed graphically as a gridded overhead map, where each grid unit (e.g., square, rectangle, hex tile, etc) of the map corresponds to a page of the PDF file. This allows easy selection of an area of interest to view. In addition, depending upon the functionality of the mobile electronic device **20',** a zoom function may be activated, and a given grid unit may be zoomed into to thereby display a further grid showing finer details of the area of interest, such that the vantage point may be easily selected.

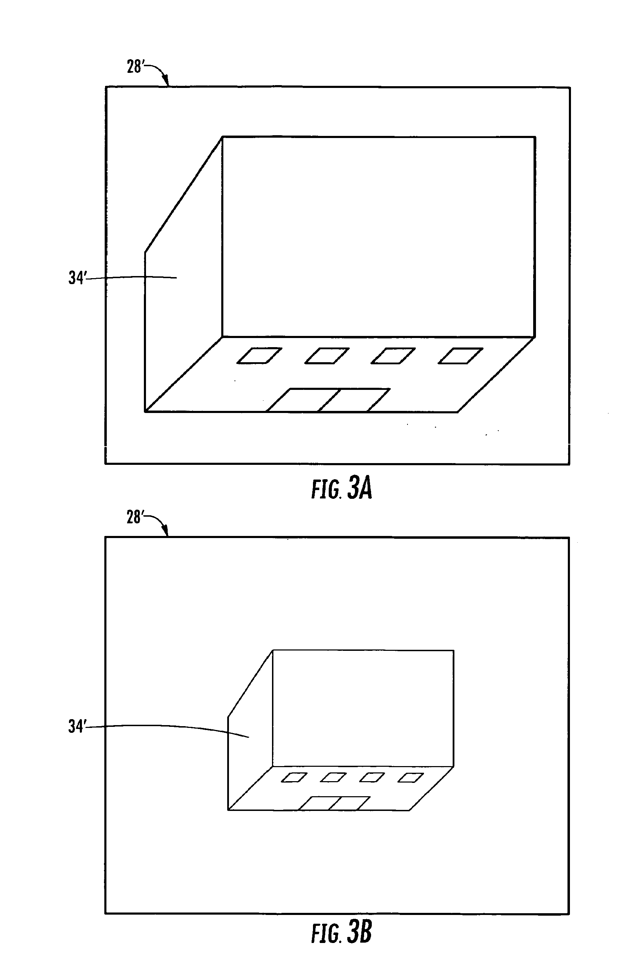

An example is now described with reference to FIGS. 3A-3B, 4A-4B, and 5A-5B. Here, the processor **24'** of the mobile electronic device **20'** is executing a PDF viewing application. The PDF file contains 6 pages, each page holding a 2D images of the series thereof. Also, here, the input device **30'** is limited, allowing for forward and back flipping between the PDF pages. As shown in FIG. 3A, the selected geographic area, illustratively including a building **34',** is displayed as page 1 of 6 of the PDF file on the display **28'.** The vantage point in FIG. 3A is a point above the building **34'.** Advancing the PDF file to the next page results in the building **34'** being displayed, with the vantage point also being above the building, but at a greater altitude, in FIG. 3B. Thus, from page 1 to page 2 of the PDF file (FIG. 3A to FIG. 3B), the vantage point has changed in the Z-direction.

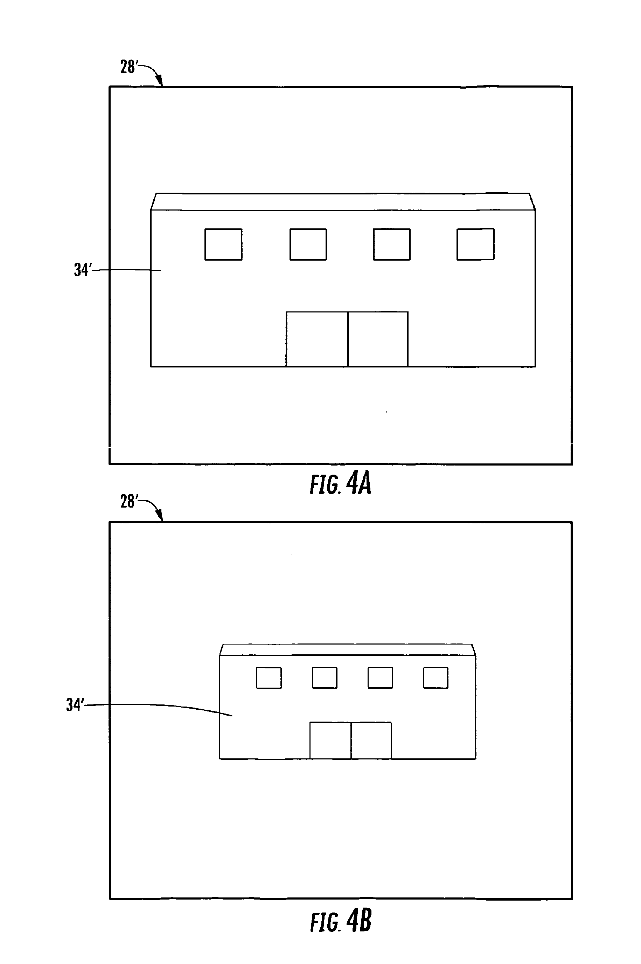

Advancing to page 3 of the PDF file advances to a next chapter. As shown in FIG. 4A, the building **34'** is displayed as page 3 of the PDF file on the display **28'.** The vantage point in FIG. 4A is at the front of the building and at ground level. Advancing the PDF file to the next page results in the building **34'** being displayed, with the vantage point also being in front of the building and at ground level, but farther away from the building. Therefore, from page 3 to page 4 (FIG. 4A to FIG. 4B), the vantage point has changed in the Y-direction.

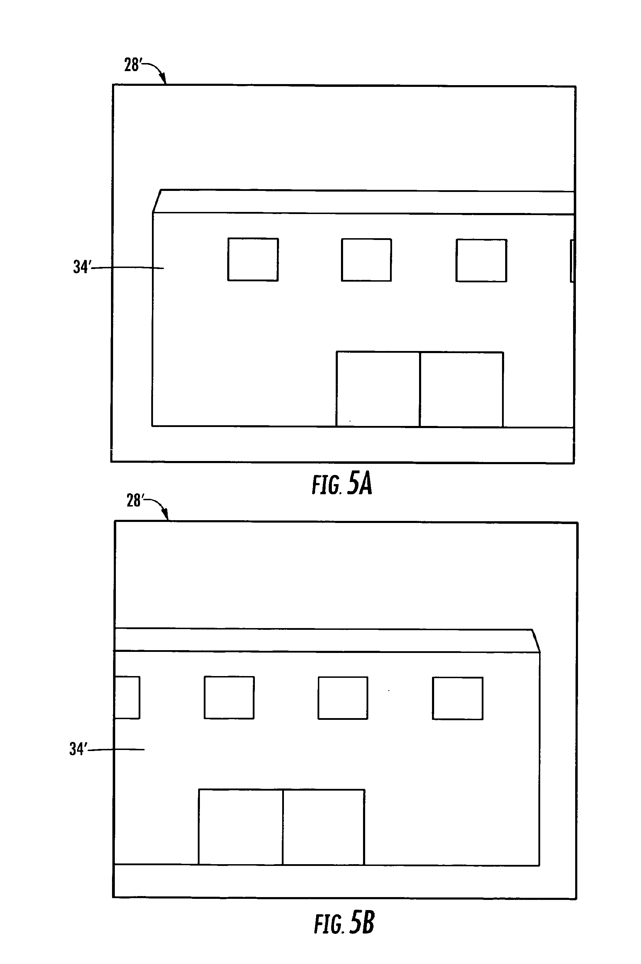

Advancing to page 5 of the PDF file advances to a next chapter. As shown in FIG. 5A, the building **34'** is displayed as page 5 of the PDF file on the display **28'.** The vantage point in FIG. 5A is at the front of the building and at ground level. Advancing the PDF file to the next page results in the building **34'** being displayed, with the vantage point also being in front of the building and at ground level, but shifted to the right of the building. Therefore, from page 5 to page 6 (FIG. 5A to FIG. 5B), the vantage point has changed in the X-direction.

Those skilled in the art will appreciate that the vantage points can change in multiple directions at once, so that the series of 2D images may include a series of images rotating about the given area.

The sequence index can be useful in the above example in allowing a user to quickly flip from an overhead view to a front view of the given geographical area, for example. In addition, the orientation of the displayed 2D image can be altered on the display **28',** so that the mobile electronic device **20'** can be rotated such that the direction of flipping the pages of the PDF matches the direction of movement. For example, the input device **30'** may include left and right keys when the mobile electronic device **20'** is held in a landscape orientation. The orientation of the 2D image displayed on the display **28'** may be such that selection of the left or right key results in the vantage point moving to the left or right (e.g., in the X-direction). Then, the electronic device **20'** may be rotated to a portrait orientation, and the PDF file may be advanced to a chapter where the vantage point moves vertically (e.g., in the Y-direction). Now, the left and right keys of the input device **30'** will look like and function as up and down arrows, and selection of the up key or the down key will result in the vantage point moving up or down.

Although the example geographic area in FIGs. 3A-5B is the exterior of a building, it should be understood that the geographic area may also be the interior of a building. In fact, the series of 2D images may include images of both the interior and exterior of the building, and a button may be pushed or a gesture may be performed to move the vantage point inside or outside the building.

In some applications, the processor **24'** may accept annotations or modifications to the series of 2D images via the input device **30',** and may in turn pass these annotations or modifications to the data server **12'.** The data server **12'** may then update the 3D geospatial model based upon the annotations or modifications receives from the mobile electronic device **20'.** Additionally or alternatively, the data server **12'** may receive updates to the 3D geospatial model from any source, and may then update the series of 2D images stored on the mobile electronic device **20'** based upon the updates to the 3D geospatial model.

Further, the mobile electronic device **20'** may also include a GPS receiver (not shown), and the processor **24'** may allow display of either a subset of the 2D images, or the entire set of the series of 2D images, based upon the GPS receiver. In such an embodiment, the GPS receiver may indicate that the mobile electronic device **20'** is in a secure area, and the processor **24'** may then allow display of the entire series of 2D images. Alternatively, the GPS receiver may indicate that the mobile electronic device **20'** is in a non-secure area, and the processor **24'** may then allow display of a subset of the series of 2D images.

In embodiments where the series of 2D images is stored in a 3D array, organization of the sequence index into chapters may not be needed, and, indeed, the sequence index itself may not be needed. Rather, the processor **24'** may simply display the next image of the series of 2D images based upon a selected next vantage point. The selection of the next vantage point may be performed by selecting a direction (X, Y, Z, or combinations thereof) in which the vantage point should be changed, and then the processor **24'** advances the 3D in a corresponding direction.

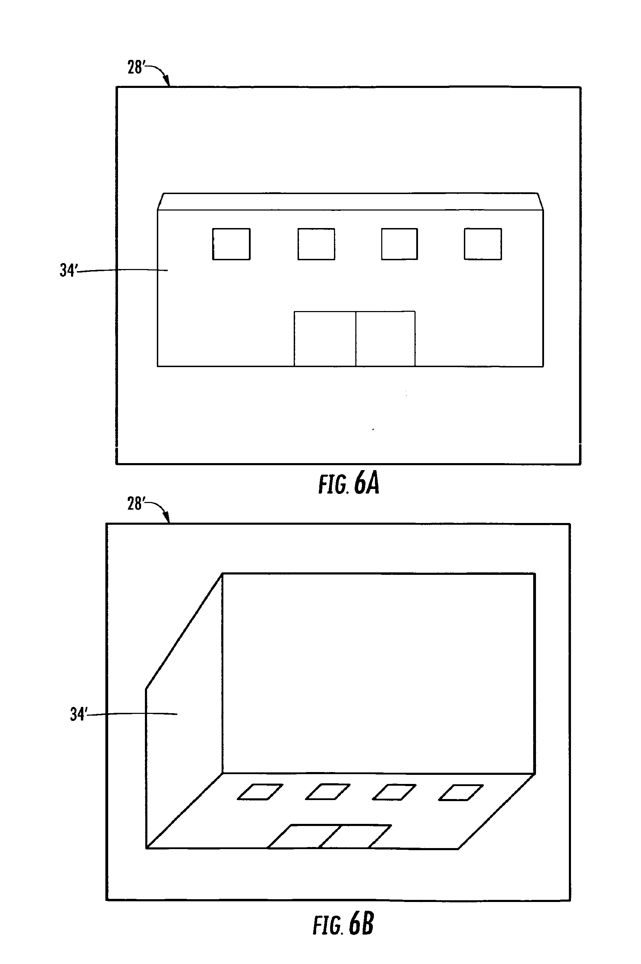

One such embodiment is illustrated with further reference to FIGS. 6A-6F. In this embodiment, the input device **30'** includes left/right, up/down, toward/away, and rotational buttons. Additionally or alternatively, the display **28'** may be a touch sensitive display and serve as input device **30',** and the above discussed buttons may be virtual buttons. Still further, gestures as described above may be used to perform the functions of these buttons.

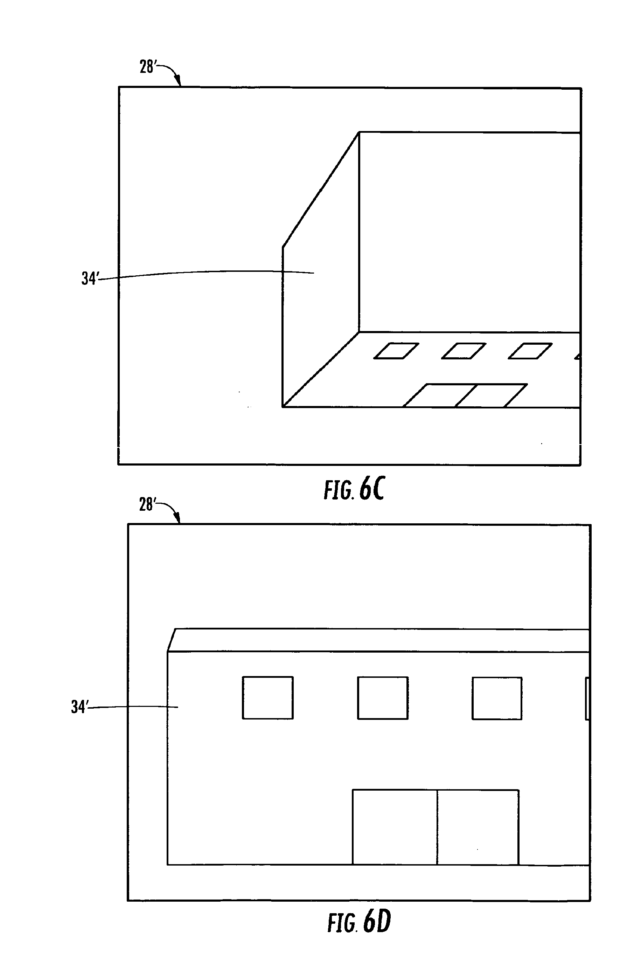

In FIG. 6A, the file being displayed contains 6 pages, each page holding a 2D images of the series thereof. As shown in FIG. 6A, the selected geographic area, illustratively including a building **34',** is displayed as page 1 of 6 of the PDF file on the display **28'.** The vantage point in FIG. 6A is a point in front of the building **34',** at ground level. As explained above, the image may be "flipped" in any direction due to the functionality of this particular mobile electronic device **20".** Flipping the page downward, such as by using an down button or downward swipe, results in the vantage point being moved in the Z-direction, such that the next image, as shown in FIG. 6B, has a vantage point at a point above the building **34'.** Flipping the page to the side, such as by using a right button or swipe, results in the vantage point being moved in the X-direction, such that the next image, as shown in FIG. 6C, has a vantage point moved to the left as compared to the vantage point of FIG. 6B.

Flipping the page upward, such as by using an up button or upward swipe, results in the vantage point being moved in the Z-direction again, so that the next image, as shown in FIG. 6D, is once again at ground level and in front of the building **34'.** As can be seen, the vantage point retains the X-direction displacement caused by the right flip performed to advance from FIGS. 6B to 6C.

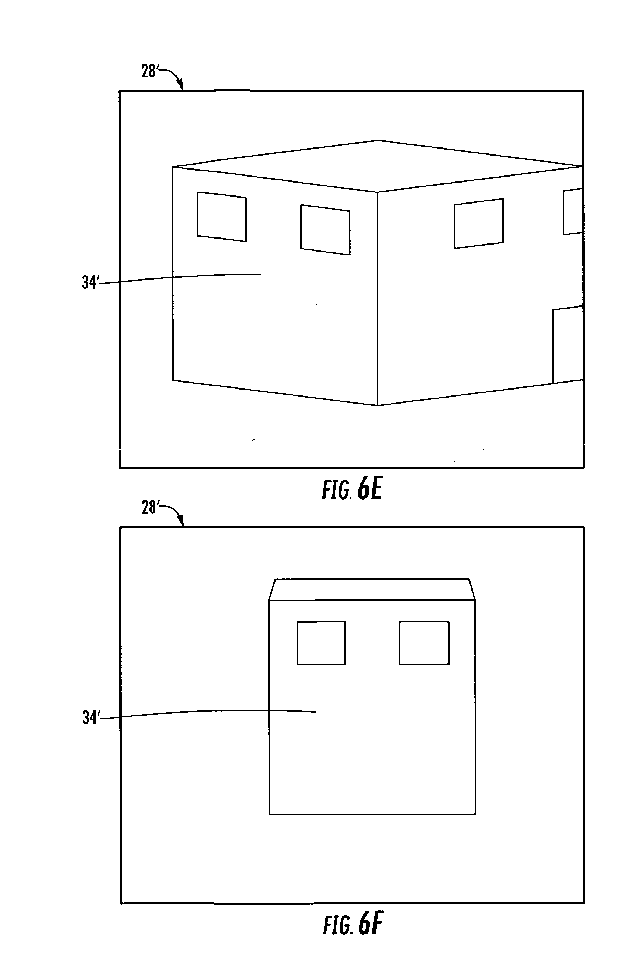

Flipping the page in a diagonal direction towards the upper right by using a diagonal button or swipe, results in the vantage point being rotated about the building **34'** to the left, as shown in FIG. 6E. Further flipping of the page in the same diagonal direction results in the vantage point being further rotated about the building **34'** to the left, such that the image shown is now a ground level view of the left side of the building, as shown in FIG. 6F.

A method of operating a communications system is now described with reference to the flowchart **40** of FIG. 6. After the start (Block **42**), a three dimensional (3D) geospatial model is stored in an image data server (Block **44b**). Thereafter, a series of two dimensional (2D) images corresponding to different vantage points for a given area of the 3D geospatial model are generated, using the image data server (Block **46**). Then, an initial image from the series of 2D images corresponding to an initial vantage point is presented on a display of a mobile electronic device (Block **48**). Next, selection of a next vantage point is permitted, using the mobile electronic device (Block **50**). A next image of the series of 2D images corresponding to the next vantage point is then displayed on the display of the mobile electronic device (Block **52**).

## Claims

1. A communications system comprising:
an image data server configured to
store a three dimensional (3D) geospatial model, and
generate a series of two dimensional (2D) images corresponding to different vantage points for a given area of the 3D geospatial model; and
a mobile electronic device configured to cooperate with said image data server and comprising
a display,
a processor coupled to said display and configured to
present an initial image from the series of 2D images on said display corresponding to an initial vantage point,
permit selection of a next vantage point, and
display a next image of the series of 2D images on said display corresponding to the next vantage point.

2. The communications system of Claim 1, wherein said data server generates a sequence index for the series of 2D images; and wherein said processor displays a next image based upon the sequence index.

3. The communications system of Claim 2, wherein said data server generates the sequence index for the series of 2D images corresponding to different vantage points in at least one of x, y and z directions.

4. The communications system of Claim 1, wherein said image data server is configured to generate the series of 2D images based upon selection of the given area.

5. The communications system of Claim 4, wherein said mobile electronic device selects the given area.

6. The communications system of Claim 4, further comprising a command device; and wherein said command device selects the given area.

7. A method of operating a communications system comprising:
storing a three dimensional (3D) geospatial model in an image data server;
generating a series of two dimensional (2D) images corresponding to different vantage points for a given area of the 3D geospatial model, using the image data server;
presenting an initial image from the series of 2D images corresponding to an initial vantage point, on a display of a mobile electronic device;
permitting selection of a next vantage point, using the mobile electronic device; and
displaying a next image of the series of 2D images corresponding to the next vantage point, on the display of the mobile electronic device.

8. The method of Claim 7, further comprising generating a sequence index for the series of 2D images using the image data server; and wherein the mobile electronic device displays a next image based upon the sequence index.

9. The method of Claim 8, wherein the sequence index generated for the series of 2D images corresponding to different vantage points in at least one of x, y and z directions.

10. The method of Claim 7, wherein the series of 2D images is generated based upon selection of the given area.
